# EUROPEAN PATENT SPECIFICATION

(11) **EP 2 832 818 B1**
(45) Date of publication and mention of the grant of the patent: **12.10.2016**
(21) Application number: 12872469.7
(22) Date of filing: 29.03.2012
(51) Int. Cl.: C09K 11/70

(54) **LUMINESCENT MATERIALS DOPED WITH METAL NANO PARTICLES AND PREPARATION METHODS THEREFOR**
MIT METALLNANOPARTIKELN DOTIERTE LUMINESZIERENDE MATERIALIEN UND HERSTELLUNGSVERFAHREN DAFÜR
MATIÈRES LUMINESCENTES DOPÉES PAR DES NANOPARTICULES MÉTALLIQUES ET LEURS PROCÉDÉS DE PRÉPARATION

(43) Date of publication of application: 04.02.2015
(73) Proprietor: Ocean's King Lighting Science&Technology Co., Ltd., Guangdong 518054 (CN); Shen Zhen Ocean's King Lighting Engineering Co. Ltd, Shenzhen, Guangdong 518054 (CN)
(72) Inventor: ZHOU, Mingjie, Shenzhen Guangdong 518054 (CN); LIU, Jun, Shenzhen Guangdong 518054 (CN); WANG, Rong, Shenzhen Guangdong 518054 (CN); CHEN, Guitang, Shenzhen Guangdong 518054 (CN)
(74) Representative: Lenthall, Joseph
(86) International application number: PCT/CN2012/073261
(87) International publication number: WO 2013/143104

(56) References cited:
- WO-A1-2011/134165
- WO-A1-2011/134170
- CN-A- 101 284 990
- CN-A- 102 382 646
- Yanlin Huang ET AL: "Structural Phase Formation and Tunable Luminescence of Eu2+-Activated Apatite-Type (Ca,Sr,Ba)5(PO4)2(SiO4)", Journal of The Electrochemical Society, 1 January 2011 (2011-01-01), pages J334-340, XP055126347, DOI: 10.1149/2.026111jes Retrieved from the Internet: URL:http://jes.ecsdl.org/content/158/11/J3 34.full.pdf
- XIGANG WANG ET AL: "The doping concentration dependent tunable yellow luminescence of Sr(PO)(SiO):Eu", CERAMICS INTERNATIONAL, ELSEVIER, AMSTERDAM, NL, vol. 38, no. 1, 25 July 2011 (2011-07-25), pages 701-706, XP028118686, ISSN: 0272-8842, DOI: 10.1016/J.CERAMINT.2011.07.059 [retrieved on 2011-07-30]

## Description

### FIELD OF THE INVENTION

The invention relates to the field of luminescent materials, particularly to luminescent material doped with metal nano particles and preparation methods there for.

### BACKGROUND OF THE INVENTION

Currently, field emission cathode device has drawn considerable attention due to advantages in luminance, visual angle, response time, working temperature range and power consumption. A key factor to preparation of field emission display of high performances is to prepare fluorescent powder of excellent performance. As for sulfide series and oxysulfide series luminescent materials, they have relatively high luminance and electrical conductivity, but, under the large electron beam bombardment, they prone to decompose into sulfur, which can poison the tip of cathode and produce other precipitates covering the luminescent powders, thus reducing the luminous efficiency of luminescent powders. Oxide and silicate luminescent materials have good stability but the luminous efficiency is not high enough yet.

### SUMMARY OF THE INVENTION

One problem to be solved by the present invention is to provide luminescent material doped with metal nano particles that can improve luminescent efficiency of field emission device.

The technical solution of the present invention will be described below.

A luminescent material doped with metal nano particles represented by the chemical formula of A₅₋ₓ(PO₄)₂SiO₄:xRE@M_{y}; wherein @ denotes coating, M is inner core, M is at least one of metal nanoparticles selected from Ag, Au, Pt, Pd and Cu; RE is one or two ions selected from Eu, Gd, Tb, Tm, Sm, Ce, Dy and Mn; A is one or two elements selected from Ca, Sr, Ba, Mg, Li, Na and K; x is stoichiometric number in a range of 0<x≤1; y is molar ratio of M to Si, 0<y≤0.01. Preferably, x is in a range of 0.001≤x≤0.5, y is in a range of 1×10⁻⁵≤y≤5×10⁻³.

Another problem to be solved by the present invention is to provide method for preparing the luminescent material doped with metal nano particles, comprising:
S1, at room temperature, dissolving PVP(polyvinylpyrrolidone) in deionized water to prepare Aqueous solution of PVP; then adding M collosol into the aqueous solution of PVP, stirring magnetically for 2h to 24h to obtain surface-treated M collosol solution;
S2, adding absolute ethanol and ammonia water successively into the surface-treated M collosol solution; then adding ethyl orthosilicate while stirring, performing reaction for 3h to 10h then separating and drying to obtain SiO₂@M_{y} nanospheres; wherein volume ratio of absolute ethanol/deionized water/ammonia water/ethyl orthosilicate is in a range of 10:18 to 30:3 to 8:1 to 1.5;
S3, according to the stoichiometric ratio of corresponding elements in the chemical formula of A₅₋ₓ(PO₄)₂SiO₄:xRE@M_{y}, weighing compound containing A, soluble phosphate, compound containing RE ,and SiO₂@M_{y} nanospheres obtained in S2 ,then grinding and mixing to obtain mixed powders;
S4, in air or in reducing atmosphere, calcining the mixed powders obtained from S3 at a constant temperature ranged from 800°C to 1600°C for 0.5h to 15 h; cooling to room temperature, then taking out the calcined matter and grinding to obtain luminescent material doped with metal nano particles represented by the chemical formula of A₅₋ₓ(PO₄)₂SiO₄:xRE@M_{y};
wherein @ denotes coating, M is inner core, M is at least one of metal nanoparticles selected from Ag, Au, Pt, Pd and Cu; RE is one or two ions selected from Eu, Gd, Tb, Tm, Sm, Ce, Dy and Mn; A is one or two elements selected from Ca, Sr, Ba, Mg, Li, Na and K; x is stoichiometric number in a range of 0<x≤1; y is molar ratio of M to Si, 0<y≤0.01.

In S1 of the method for preparing the luminescent material doped with metal nano particles, the M collosol is prepared by the following steps:
mixing solution of salt containing M, assistant agent used for dispersing and reducing agent, reacting while stirring to obtain M collosol; wherein molar concentration of M collosol is in a range of 5×10⁻⁴mol/L to 5×10⁻²mol/L.

In the solution of salt containing M, salt used as source of M is at least one of AgNO₃, AuCl₃·HCl·4H₂O, H₂PtCl₆·6H₂O, PdCl₂·2H₂O and Cu(NO₃)₂.

Assistant agent is at least one of polyvinylpyrrolidone, sodium citrate, cetyl trimethyl ammonium bromide, sodium dodecyl sulfate, and sodium dodecyl sulfonate; the assistant agent is added in an amount sufficient to obtain a concentration in M collosol in a range of 1×10⁻⁴g/mL to 5×10⁻²g/mL;
Reducing agent is at least one of hydrazine hydrate, ascorbic acid, sodium citrate and sodium borohydride; molar ratio of reducing agent to M is in a range of 3.6:1 to 18:1.

In S1 of the method for preparing the luminescent material doped with metal nano particles, concentration of PVP in the aqueous solution of PVP is in a range of 0.005g/mL to 0.1g/mL.

In S3 of the method for preparing the luminescent material doped with metal nano particles, the compound containing A is selected from oxide of A, carbonate of A and oxalate of A; soluble phosphate is NH₄H₂PO₄ or (NH₄)₂HPO₄; the compound containing RE is selected from oxide of RE, carbonate of RE and oxalate of RE.

In S3 of the method for preparing the luminescent material doped with metal nano particles, the reducing atmosphere is mixed gases of N₂ and H₂, the volume ratio of H₂ to H₂ is 95:5.

In the method for preparing the luminescent material doped with metal nano particles, x is preferably in a range of 0.001≤x≤0.5, y is preferably in a range of 1×10⁻⁵≤y≤5×10⁻³.

The luminescent material doped with metal nano particles of the invention show relatively high luminescent efficiency under excitation by electron beam, thus can be used in field emission light source devices.

The method for preparing luminescent material doped with metal nano particles of the present invention is simple, high-quality, low-cost, and can be widely used in the manufacture of luminescent materials.

### BRIEF DESCRIPTION OF THE DRAWINGS

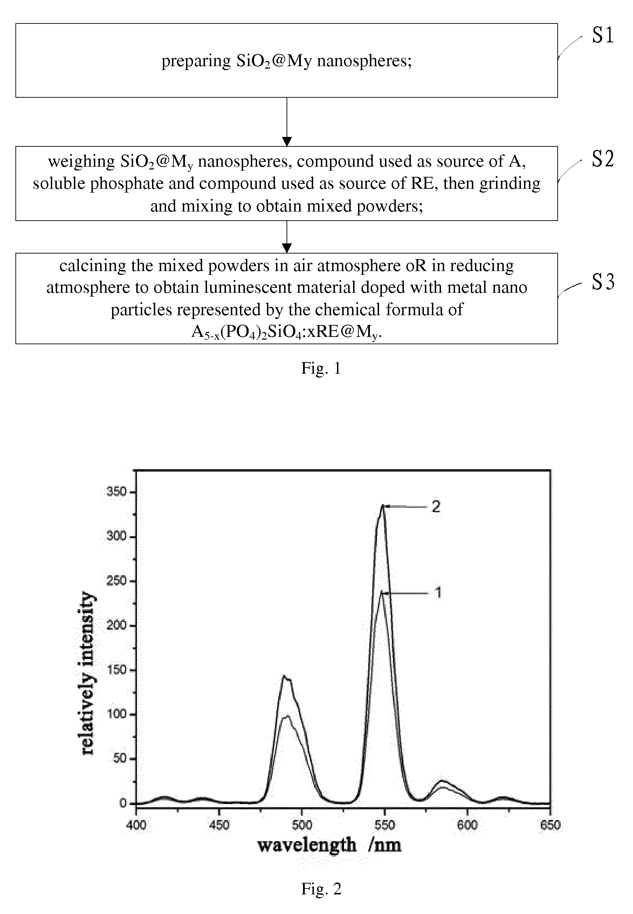

Fig. 1 is a flow diagram showing the preparation of luminescent material doped with metal nano particles;
Fig. 2 shows an emission spectrum of the luminescent material doped with Ag nano particles (Sr_{4.7}Li_{0.15}(PO₄)₂SiO₄:0.05Gd, ³⁺0.1Tb³⁺@Ag_{1×10⁻⁵}) of Example 7, compared to the luminescent material without Ag nano particles (Sr_{4.7}Li_{0.15}(PO₄)₂SiO₄:0.05Gd³⁺, 0.1Tb³⁺) of Comparative Example 1. Curve a is an emission spectrum of the luminescent material without doping Ag nano particles (Sr_{4.7}Li_{0.15}(PO₄)₂SiO₄:0.05Gd³⁺, 0.1Tb³⁺) of Comparative Example 1, curve b is an emission spectrum of the luminescent material doped with Ag nano particles (Sr_{4.7}Li_{0.15}(PO₄)₂SiO₄:0.05Gd³⁺, 0.1Tb³⁺@Ag_{1×10⁻⁵}) of Example 7.

### DETAILED DESCRIPTION OF ILLUSTRATED EMBODIMENTS

In one embodiment, a luminescent material doped with metal nano particles is represented by the chemical formula of A₅₋ₓ(PO₄)₂SiO₄:xRE@M_{y}; wherein @ denotes coating, M is inner core, M is at least one of metal nanoparticles selected from Ag, Au, Pt, Pd and Cu; RE is one or two ions selected from Eu, Gd, Tb, Tm, Sm, Ce, Dy and Mn; A is one or two elements selected from Ca, Sr, Ba, Mg, Li, Na and K; x is stoichiometric number in a range of 0<x≤1; y is molar ratio of M to Si, 0<y≤0.01. Preferably, x is in a range of 0.001≤x≤0.5, y is in a range of 1×10⁻⁵≤y≤5×10⁻³.

As shown in Fig. 2, method for preparing luminescent material doped with metal nano particles comprises the following steps:
S1, preparing SiO₂@M_{y} nanospheres by StOber method;
   Firstly, solution of salt containing M is mixed and reacted with assistant agent used for dispersing and reducing agent to obtain M collosol. Specifically,
   1) weighing salt containing M, assistant agent and PVP to make up aqueous solution of salt containing M, aqueous solution of assistant agent and aqueous solution of PVP;
   2) adding aqueous solution of salt containing M and aqueous solution of PVP into deionized water while stirring, then dripping aqueous solution of assistant agent; performing the reaction for 5min to 40 min to obtain M collosol; molar concentration of M collosol is in a range of 5×10⁻⁴mol/L to 5×10⁻²mol/L;

   Assistant agent is at least one of polyvinylpyrrolidone, sodium citrate, cetyl trimethyl ammonium bromide, sodium dodecyl sulfate, and sodium dodecyl sulfonate; the assistant agent is added in an amount sufficient to obtain a concentration in M collosol in a range of 1×10⁻⁴g/mL to 5×10⁻²g/mL;
   Reducing agent is at least one of hydrazine hydrate, ascorbic acid, sodium citrate and sodium borohydride; molar ratio of reducing agent to M is in a range of 3.6:1 to 18:1. The reducing agent is made up or diluted to an aqueous solution in which the concentration of reducing agent is in a range of 1mol/L to 1×10⁻⁴mol/L.
   The salt containing M is at least one of AgNO₃, AuCl₃·HCl·4H₂O, H₂PtCl₆·6H₂O, PdCl₂·2H₂O and Cu(NO₃)₂, solvent is water or ethanol; the M is at least one of Ag, Au, Pt, Pd and Cu nanoparticle.
   Secondly, the M collosol is added into aqueous solution of PVP. After surface treatment on M nanoparticle, SiO₂ nanospheres are coated by StOber method to obtain SiO₂@M_{y} nanospheres. Specifically,
   1) At room temperature, dissolving PVP in deionized water, then adding M collosol, stirring magnetically for 2 to 24h to obtain surface-treated M collosol solution; concentration of PVP in the aqueous solution of PVP is in a range of 0.005g/mL to 0.1g/mL;
   2) adding absolute ethanol and ammonia water successively into the surface-treated M and stirring thoroughly; then adding ethyl orthosilicate while stirring, performing reaction for 3h to 10h then separating and drying to obtain SiO₂@M_{y} nanospheres; wherein volume ratio of absolute ethanol, deionized water, ammonia water and ethyl orthosilicate is in a range of 10:18 to 30:3 to 8:1 to 1.5;
S2, according to the stoichiometric ratio of corresponding elements in the chemical formula of A₅₋ₓ(PO₄)₂SiO₄:xRE@M_{y}, weighing compound containing A, soluble phosphate, compound containing RE ,and SiO₂@M_{y} nanospheres obtained in S1 ,then grinding and mixing to obtain mixed powders; wherein an excess of NH₄H₂PO₄ or (NH₄)₂HPO₄ of 0-50 mol% (molar percent) can be used to avoid insufficient amount of reactant caused by decomposition and volatilization of NH₄H₂PO₄ or (NH₄)₂HPO₄ during the reaction.
S3, in air atmosphere or in reducing atmosphere of mixed gases of N₂ and H₂ in a volume ratio of 95:5, calcining the mixed powders obtained from S2 at a constant temperature ranged from 800°C to 1600°C for 0.5h to 15 h; then cooling to room temperature, taking out the calcined matter and grinding to obtain luminescent material doped with metal nano particles represented by the chemical formula of A₅₋ₓ(PO₄)₂SiO₄:xRE@M_{y}.
wherein @ denotes coating, M is inner core, M is one of metal nanoparticles selected from Ag, Au, Pt, Pd and Cu; RE is one or two ions selected from Eu, Gd, Tb, Tm, Sm, Ce, Dy and Mn; A is one or two elements selected from Ca, Sr, Ba, Mg, Li, Na and K; x is stoichiometric number in a range of 0<x≤1; y is molar ratio of M to Si, 0<y≤0.01.

In S2 of the method for preparing the luminescent material doped with metal nano particles, the compound containing A is selected from oxide of A, carbonate of A and oxalate of A; soluble phosphate is NH₄H₂PO₄ or (NH₄)₂HPO₄; compound containing RE is selected from oxide of RE, carbonate of RE and oxalate of RE.

In S3 of the method for preparing the luminescent material doped with metal nano particles, the reducing atmosphere is mixed gases of N₂ and H₂ in a volume ratio of 95:5.

In the method for preparing the luminescent material doped with metal nano particles, x is preferably in a range of 0.001≤x≤0.5, y is preferably in a range of 1×10⁻⁵≤y≤5×10⁻³.

The luminescent material doped with metal nano particles of the invention show relatively high luminescent efficiency under excitation by electron beam, thus can be used in field emission light source devices.

The method for preparing luminescent material doped with metal nano particles of the present invention is simple, high-quality, low-cost, and can be widely used in the manufacture of luminescent materials.

Further description of the present invention will be illustrated, which combined with preferred embodiments and the drawings.

### Example 1

Luminescent material Sr₄(PO₄)₂SiO₄:Ce³⁺ doped with Pt nano particles, i.e. Sr₄(PO₄)₂SiO₄:Ce³⁺@Pt_{1×10}⁻³
1. 5.2 mg of chloroplatinic acid H₂PtCl₆·6H₂O was dissolved in 17 mL of ethanol. After the chloroplatinic acid completely dissolved, 8 mg of sodium citrate and 1.2 mg of sodium dodecyl sulfonate were added while stirring, then slowly dripped into 0.4 mL of 1×10⁻³ mol/L ethanol solution of sodium borohydride prepared by dissolving 0.4 mg of sodium borohydride into 10 mL of ethanol. The reaction was performed for 5 min, followed by addition of 2.6 mL of 1×10⁻²mol/L solution of hydrazine hydrate. The reaction was continued for 40 min to obtain 30 mL of Pt nanoparticles collosol in which the concentration of Pt was 5×10⁻³mol/L.
2, At room temperature, 0.60 g of PVP were weighed and dissolved in 6 mL of deionized water, followed by addition of 4 mL of the 5×10⁻³mol/L Pt nanoparticles collosol. Surface-treated Pt nanoparticles collosol were obtained after magnetically stirring for 18 h.
3, 18 mL of absolute ethanol, 3 mL of ammonia water and 1.0 mL of ethyl orthosilicate were successively added into the Pt nanoparticles collosol obtained previously while stirring. The reaction was performed for 5 h, followed by centrifugal separation, washing and drying, SiO₂@Pt_{1×10⁻³} nanospheres were obtained.
4, 3.3862g of SrC₂O₄·2H₂O, 1.3806g of NH₄H₂PO₄ (in excess of 50 mol%), 1.0886g of Ce₂(C₂O₄)₃ and 0.2524g of SiO₂@Pt were weighed and grinded in an agate mortar for mixing thoroughly to obtain mixed powders. The mixed powders were transferred to a corundum crucible, then reduced and calcined in tube furnace at 1600°C for 0.5h in the reducing atmosphere comprising 95 vol% of N₂ and 5 vol% of H₂. The obtained product was cooled to room temperature. Luminescent material Sr₄(PO₄)₂SiO₄:Ce³⁺ doped with Pt nano particles, i.e. Sr₄(PO₄)₂SiO₄:Ce³⁺@Pt_{1×10⁻³} was obtained.

### Example 2

Luminescent material Sr_{4.9}Mg_{0.098}(PO₄)₂SiO₄:0.002Tm³⁺ doped with Ag nano particles, i.e. Sr_{4.9}Mg_{0.098}(PO₄)₂SiO₄:0.002Tm³⁺@Ag_{1.25×10}⁻⁴
1, 3.4 mg of silver nitrate AgNO₃ and 35.28 mg of sodium citrate were dissolved in 18.4 mL of deionized water while stirring, then slowly dripped into 1.6 mL of 0.01mol/L ethanol solution of sodium borohydride prepared by dissolving 3.8 mg of sodium borohydride into 10 mL of ethanol. The reaction was performed for 5 min while stirring to obtain 20 mL of Ag nanoparticles collosol in which the concentration of Ag was 1×10⁻³mol/L.
2, At room temperature, 0.1g of PVP were weighed and dissolved in 9.5mL of deionized water, followed by addition of 0.5mL of the 1×10⁻³mol/L Ag nanoparticles collosol. Surface-treated Ag nanoparticles collosol were obtained after magnetically stirring for 2 h.
3, 25mL of absolute ethanol, 6mL of ammonia water and 1.0mL of ethyl orthosilicate were successively added into the Ag nanoparticles collosol obtained previously while stirring. The reaction was conducted for 6h, followed by centrifugal separation, washing and drying, SiO₂@Ag_{1.25×10⁻⁴} nanospheres were obtained.
4, 2.8935g of SrCO₃, 0.0331g of MgCO₃, 1.1965g of NH₄H₂PO₄ (in excess of 30 mol%), 0.0021g of Tm₂(CO₃)₃ and 0.2524g of SiO₂@Ag were weighed and grinded in an agate mortar for mixing thoroughly to obtain mixed powders. The mixed powders were transferred to a corundum crucible, then calcined in muffle furnace at 1100°C for 4h in air atmosphere. The obtained product was cooled to room temperature. Luminescent material Sr_{4.9}Mg_{0.098}(PO₄)₂SiO₄:0.002Tm³⁺ doped with Ag nano particles, i.e. Sr_{4.9}Mg_{0.098}(PO₄)₂SiO₄:0.002Tm³⁺@Ag_{1.25×10}⁻⁴ was obtained.

### Example 3

Luminescent material Ca₄Li_{0.5}(PO₄)₂SiO₄:0.5Sm³⁺ doped with Au nano particles, i.e. Ca₄Li_{0.5}(PO₄)₂SiO₄:0.5Sm³⁺@Am_{1×10⁻³}
1, 9.5mg of sodium borohydride were dissolved in 10mL of ethanol to obtain 10mL of 0.02mol/L ethanol solution of sodium borohydride for later use. 205.9mg of chloroauric acid AuCl₃·HCl·4H₂O were dissolved in 7.5mL of ethanol. After completely dissolved, 56mg of sodium citrate and 24mg of cetyl trimethyl ammonium bromide were added while stirring, followed by addition of 2.5mL of ethanol solution of sodium borohydride prepared previously while magnetically stirring. The reaction was performed for 30min to obtain 10 mL of Au nanoparticles collosol in which the concentration of Au was 5×10⁻²mol/L.
2, At room temperature, 0.18g of PVP were weighed and dissolved in 9mL of deionized water, followed by addition of 1mL of the 5×10⁻³mol/L Au nanoparticles collosol. Surface-treated Au nanoparticles collosol were obtained after magnetically stirring for 24 h.
3, 20mL of absolute ethanol, 5mL of ammonia water and 1.2 mL of ethyl orthosilicate were successively added into the Au nanoparticles collosol obtained previously while stirring. The reaction was conducted for 3 h, followed by centrifugal separation, washing and drying, SiO₂@Au_{1×10⁻³} nanospheres were obtained.
4, 1.6014g of CaCO₃, 0.0739g of Li₂CO₃, 1.1965g of NH₄H₂PO₄ (in excess of 30 mol%), 0.3487g of Sm₂O₃ and 0.3155g of SiO₂@Au were weighed and grinded in an agate mortar for mixing thoroughly to obtain mixed powders. The mixed powders were transferred to a corundum crucible, then calcined in tube furnace at 800°C for 10h in air atmosphere. The obtained product was cooled to room temperature. Luminescent material Ca₄Li_{0.5}(PO₄)₂SiO₄:0.5Sm³⁺ doped with Au nano particles, i.e. Ca₄Li_{0.5}(PO₄)₂SiO₄:0.5Sm³⁺@Au_{1×10⁻³} was obtained.

### Example 4

Luminescent material Ba_{4.8}Na_{0.1}(PO₄)₂SiO₄:0.1Eu²⁺ doped with Pd nano particles, i.e. Ba_{4.8}Na_{0.1}(PO₄)₂SiO₄:0.1Eu²⁺@Pd_{1×10⁻²}
1, 34.4mg of palladium chloride PdCl₂·2H₂O were dissolved in 15mL of deionized water. After the palladium chloride completely dissolved, 1.1 g of sodium citrate and 0.4g of sodium dodecyl sulfate were added while stirring, then slowly dripped into 5mL of 0.1mol/L ethanol solution of ascorbic acid. The reaction was performed for 20 min to obtain 20 mL of Pd nanoparticles collosol in which the concentration of Pd was 8×10⁻³mol/L.
2, At room temperature, 0.20g of PVP were weighed and dissolved in 5mL of deionized water, followed by addition of 5mL of the 8×10⁻³mol/L Pd nanoparticles collosol. Surface-treated Pd nanoparticles collosol were obtained after magnetically stirring for 12 h.
3, 25mL of absolute ethanol, 4mL of ammonia water and 1.5 mL of ethyl orthosilicate were successively added into the Pd nanoparticles collosol obtained previously while stirring. The reaction was performed for 8 h, followed by centrifugal separation, washing and drying, SiO₂@ Pd_{1×10⁻²} nanospheres were obtained.
4, 3.7888g of BaCO₃, 0.0212g of Na₂CO₃, 1.1965g of NH₄H₂PO₄ (in excess of 30 mol%), 0.0704g of Eu₂O₃ and 0.2524g of SiO₂@Pd were weighed and grinded in an agate mortar for mixing thoroughly to obtain mixed powders. The mixed powders were transferred to a corundum crucible, then reduced and calcined in tube furnace at 1100°C for 6h in the reducing atmosphere comprising 95 vol% of N₂ and 5 vol% of H₂. The obtained product was cooled to room temperature. Luminescent material Ba_{4.8}Na_{0.1}(PO₄)₂SiO₄:0.1Eu²⁺ doped with Pd nano particles, i.e. Ba_{4.8}Na_{0.1}(PO₄)₂SiO₄:0.1Eu²⁺@Pd_{1×10⁻²} was obtained.

### Example 5

Luminescent material Sr_{4.999}(PO₄)₂SiO₄:0.001Mn²⁺ doped with Ag nano particles, i.e. Sr_{4.999}(PO₄)₂SiO₄:0.001Mn²⁺@Ag_{1×10⁻⁵}
1, 10mL of 0.025 mol/L aqueous solution of AgNO₃, 10mL of 0.025 mol/L aqueous solution of sodium citrate and 10mL of 5mg/mL aqueous solution of PVP were prepared separately by using 3.4mg of AgNO₃, 0.0733 sodium citrate, 0.05g of PVP. To 30mL of deionized water, 2mL of aqueous solution of AgNO₃ and 4mL of aqueous solution of PVP were added while stirring, heating at 100°C, then dripping 4mL of aqueous solution of sodium citrate. The reaction was performed for 15min to obtain 40mL of Ag nanoparticles collosol in which the concentration of Ag was 5×10⁻⁴mol/L.
2, At room temperature, 0.05g of PVP were weighed and dissolved in 5mL of deionized water, followed by addition of 5mL of the 5×10⁻⁴mol/L Ag nanoparticles collosol. Surface-treated Ag nanoparticles collosol were obtained after magnetically stirring for 18 h.
3, 30mL of absolute ethanol, 8mL of ammonia water and 1.5 mL of ethyl orthosilicate were successively added into the Ag nanoparticles collosol obtained previously while stirring. The reaction was performed for 10 h, followed by centrifugal separation, washing and drying, SiO₂@Ag_{1×10⁻⁵} nanospheres were obtained.
4, 2.9526g of SrCO₃, 1.1965g of NH₄H₂PO₄ (in excess of 30 mol%), 0.3155g of SiO₂@Ag and 0.0012g of Mn(CH₃COO)₂·4H₂O were weighed and grinded in an agate mortar for mixing thoroughly to obtain mixed powders. The mixed powders were transferred to a corundum crucible, then reduced and calcined in tube furnace at 1100°C for 5h in the reducing atmosphere comprising 95 vol% of N₂ and 5 vol% of H₂. The obtained product was cooled to room temperature. Luminescent material Sr_{4.999}(PO₄)₂SiO₄:0.001Mn²⁺ doped with Ag nano particles, i.e. Sr_{4.999}(PO₄)₂SiO₄:0.001Mn²⁺@Ag_{1×10⁻⁵} was obtained.

### Example 6

Luminescent material Sr_{4.9}K_{0.05}(PO₄)₂SiO₄:0.05Dy³⁺ doped with Cu nano particles, i.e. Sr_{4.9}K_{0.05}(PO₄)₂SiO₄:0.05Dy³⁺@Cu_{8×10⁻³}
1, 30mg of copper nitrate Cu(NO₃)₂ were dissolved in 15mL of deionized water. After the copper nitrate completely dissolved, 1.1g of sodium citrate and 0.4g of sodium dodecyl sulfate were added while stirring, then slowly dripped into 5mL of 0.1mol/L ethanol solution of ascorbic acid. The reaction was performed for 20 min to obtain 20 mL of Cu nanoparticles collosol in which the concentration of Cu was 8×10⁻³mol/L.
2, At room temperature, 0.03g of PVP were weighed and dissolved in 6mL of deionized water, followed by addition of 4mL of the 8×10⁻³mol/L Cu nanoparticles collosol. Surface-treated Cu nanoparticles collosol were obtained after magnetically stirring for 24 h.
3, 20mL of absolute ethanol, 5mL of ammonia water and 1.2 mL of ethyl orthosilicate were successively added into the Cu nanoparticles collosol obtained previously while stirring. The reaction was performed for 4 h, followed by centrifugal separation, washing and drying, SiO₂@Cu_{8×10⁻³} nanospheres were obtained.
4, 2.8935g of SrCO₃, 0.0138g of K₂CO₃, 1.0565g of (NH₄)₂HPO₄, 0.2524g of SiO₂@Cu and 0.0373g of Dy₂O₃ were weighed and grinded in an agate mortar for mixing thoroughly to obtain mixed powders. The mixed powders were transferred to a corundum crucible, then calcined in tube furnace at 1000°C for 15h in air atmosphere. The obtained product was cooled to room temperature. Luminescent material Sr_{4.9}K_{0.05}(PO₄)₂SiO₄:0.05Dy³⁺ doped with Cu nano particles, i.e. Sr_{4.9}K_{0.005}(PO₄)₂SiO₄:0.05Dy³⁺@Cu_{8×10⁻³} was obtained.

### Example 7

Luminescent material Sr_{4.7}Li_{0.15}(PO₄)₂SiO₄:0.05Gd³⁺,0.1Tb³⁺ doped with Ag nano particles, i.e. Sr_{4.7}Li_{0.15}(PO₄)₂SiO₄:0.05Gd³⁺, 0.1Tb³⁺@Ag_{1×10⁻⁵}
1, 10mL of 0.025 mol/L aqueous solution of AgNO₃, 10mL of 0.025 mol/L aqueous solution of sodium citrate and 10mL of 5mg/mL aqueous solution of PVP were prepared separately by using 3.4mg of AgNO₃, 0.0733 sodium citrate, 0.05g of PVP. To 30mL of deionized water, 2mL of aqueous solution of AgNO₃ and 4mL of aqueous solution of PVP were added while stirring, then dripping 4mL of aqueous solution of sodium citrate. The reaction was performed for 15min to obtain 40mL of 5×10⁻⁴mol/L Ag nanoparticles collosol.
2, At room temperature, 0.08g of PVP were weighed and dissolved in 5mL of deionized water, followed by addition of 5mL of the 5×10⁻⁴mol/L Ag nanoparticles collosol. Surface-treated Ag nanoparticles collosol were obtained after magnetically stirring for 18 h.
3, 30mL of absolute ethanol, 8mL of ammonia water and 1.5 mL of ethyl orthosilicate were successively added into the Ag nanoparticles collosol obtained previously while stirring. The reaction was performed for 10 h, followed by centrifugal separation, washing and drying, spherical SiO₂@Ag_{1×10⁻⁵} nanospheres were obtained.
4, 2.7754 g of SrCO₃, 1.2678g of (NH₄)₂HPO₄ (in excess of 20 mol%), 0.0362g of Gd₂O₃ and 0.0748g of Tb₄O₇ and 0.3155g of SiO₂@Ag were weighed and grinded in an agate mortar for mixing thoroughly to obtain mixed powders. The mixed powders were transferred to a corundum crucible, then reduced and calcined in tube furnace at 1050°C for 5h in the reducing atmosphere comprising 95 vol% of N₂ and 5 vol% of H₂. The obtained product was cooled to room temperature. Luminescent material Sr_{4.7}Li_{0.15}(PO₄)₂SiO₄:0.05Gd³⁺, 0.1Tb³⁺ doped with Ag nano particles, i.e. Sr_{4.7}Li_{0.15}(PO₄)₂SiO₄:0.05Gd³⁺, 0.1Tb³⁺@Ag_{1×10⁻⁵} was obtained.

### Example 8

Luminescent material Sr_{4.9}K_{0.05}(PO₄)₂SiO₄:0.05Dy³⁺ doped with Pt/Au nano particles, i.e. Sr_{4.9}K_{0.05}(PO₄)₂SiO₄:0.05Dy³⁺@(Pt/Au)_{1.7×10⁻³}
1, 10.7mg of chloroauric acid (AuCl₃·HNO₃·4H₂O) and 13.56mg of chloroplatinic acid (H₂PtCl₆·6H₂O) were dissolved in 28mL of deionized water. After chloroauric acid and chloroplatinic acid dissolved completely, 22mg of sodium citrate and 20mg of PVP were weighed and added into the mixed solution obtained previously while magnetically stirring. 5.7mg of freshly made sodium borohydride were dissolved in 10mL of deionized water to obtain 10mL of 1.5×10⁻²mol/L aqueous solution of sodium borohydride. While magnetically stirring, 4mL of 1.5×10⁻²mol/L aqueous solution of sodium borohydride were added into the mixed solution obtained previously. Then the reaction was performed for 20min to obtain 30mL of Pt/Au nanoparticles collosol in which the molar concentration of total metal nanoparticles was 1.7×10⁻³mol/L.
2, At room temperature, 0.03g of PVP were weighed and dissolved in 6mL of deionized water, followed by addition of 4mL of the 1.7×10⁻³mol/L Pt/Au nanoparticles collosol. Surface-treated Pt/Au nanoparticles collosol were obtained after magnetically stirring for 18 h.
3, 20mL of absolute ethanol, 5mL of ammonia water and 1.2 mL of ethyl orthosilicate were successively added into the Pt/Au nanoparticles collosol obtained previously while stirring. The reaction was performed for 4 h, followed by centrifugal separation, washing and drying, SiO₂@Pt/Au_{1.7×10⁻³} nanospheres were obtained.
4, 2.8935g of SrCO₃, 0.0138g of K₂CO₃, 1.0565g of (NH₄)₂HPO₄, 0.2524g of SiO₂@Pt/Au and 0.0373g of Dy₂O₃ were weighed and grinded in an agate mortar for mixing thoroughly to obtain mixed powders. The mixed powders were transferred to a corundum crucible, then calcined in tube furnace at 1000°C for 15h in air atmosphere. The obtained product was cooled to room temperature. Luminescent material Sr_{4.9}K_{0.05}(PO₄)₂SiO₄:0.05Dy³⁺ doped with Pt/Au nano particles, i.e. Sr_{4.9}K_{0.05}(PO₄)₂SiO₄:0.05Dy³⁺@(PT/Au)_{8×10⁻³} was obtained.

### Comparative Example 1

Luminescent material of Sr_{4.7}Li_{0.15}(PO₄)₂SiO₄:0.05Gd³⁺,0.1Tb³⁺
1, at room temperature, 0.08g of PVP was dissolved in 5mL of deionized water, stirred magnetically for 18h. Then 30mL of absolute ethanol, 8mL of ammonia water and 1.5mL of ethyl orthosilicate were added while stirring. The reaction was performed for 10h, followed by centrifugal separation, washing and drying, spherical SiO₂ nanospheres were obtained.
2, 2.7754 g of SrCO₃, 1.2678g of (NH₄)₂HPO₄ (in excess of 20 mol%), 0.0362g of Gd₂O₃ and 0.0748g of Tb₄O₇ and 0.3155g of SiO₂ were weighed and grinded in an agate mortar for mixing thoroughly to obtain mixed powders. The mixed powders were transferred to a corundum crucible, then reduced and calcined in tube furnace at 1050°C for 5h in the reducing atmosphere comprising 95 vol% of N₂ and 5 vol% of H₂. The obtained product was cooled to room temperature. Luminescent material Sr_{4.7}Li_{0.15}(PO₄)₂SiO₄:0.05Gd³⁺, 0.1Tb³⁺ doped with Ag nano particles, i.e. Sr_{4.7}Li_{0.15}(PO₄)₂SiO₄:0.05Gd³⁺, 0.1Tb³⁺ was obtained.

Fig. 2 shows an emission spectrum of the luminescent material doped with Ag nano particles (Sr_{4.7}Li_{0.15}(PO₄)₂SiO₄:0.05Gd³⁺, 0.1Tb³⁺@Ag_{1×10⁻⁵}) of Example 7, compared to the luminescent material without Ag nano particles (Sr_{4.7}Li_{0.15}(PO₄)₂SiO₄:0.05Gd³⁺, 0.1Tb³⁺) of Comparative Example 1. Curve 1 is an emission spectrum of the luminescent material without doping Ag nano particles (Sr_{4.7}Li_{0.15}(PO₄)₂SiO₄:0.05Gd³⁺, 0.1Tb³⁺) of Comparative Example 1, curve 2 is an emission spectrum of the luminescent material doped with Ag nano particles (Sr_{4.7}Li_{0.15}(PO₄)₂SiO₄:0.05Gd³⁺, 0.1Tb³⁺@Ag_{1×10⁻⁵}) of Example 7.

As shown in Fig. 2, under the excitation by cathode ray at 5KV, the emission peak shown at 545nm, luminescent intensity of the luminescent material doped with Ag nano particles is increased by 45%, compared to the luminescent material without Ag nanoparticles.

While the present invention has been described with reference to particular embodiments, it will be understood that the embodiments are illustrative and that the invention scope is not so limited. Alternative embodiments of the present invention will become apparent to those having ordinary skill in the art to which the present invention pertains. Such alternate embodiments are considered to be encompassed within the spirit and scope of the present invention. Accordingly, the scope of the present invention is described by the appended claims and is supported by the foregoing description.

## Claims

1. A luminescent material doped with metal nano particles represented by the chemical formula of A₅₋ₓ(PO₄)₂SiO₄:xRE@M_{y}; wherein @ denotes coating, M is inner core, M is at least one of metal nanoparticles selected from Ag, Au, Pt, Pd and Cu; RE is one or two ions selected from Eu, Gd, Tb, Tm, Sm, Ce, Dy and Mn; A is one or two elements selected from Ca, Sr, Ba, Mg, Li, Na and K; x is stoichiometric number in a range of 0<x≤1; y is molar ratio of M to Si, 0<y≤0.01.

2. The luminescent material doped with metal nano particles according to claim 1, wherein x is in a range of 0.001≤x≤0.5, y is in a range of 1×10⁻⁵≤y≤5×10⁻³.

3. A method for preparing luminescent material doped with metal nano particles, comprising:
S1, at room temperature, dissolving polyvinylpyrrolidone (PVP) in deionized water to prepare aqueous solution of polyvinylpyrrolidone (PVP); then adding M collosol into the aqueous solution of polyvinylpyrrolidone (PVP), stirring magnetically for 2h to 24h to obtain surface-treated M collosol solution; the M collosol is prepared by the following steps: mixing solution of salt containing M, assistant agent used for dispersing and reducing agent, reacting while stirring to obtain M collosol; wherein molar concentration of M collosol is in a range of 5×10⁻⁴mol/L to 5×10⁻²mol/L, wherein the assistant agent is at least one of polyvinylpyrrolidone, sodium citrate, cetyl trimethyl ammonium bromide, sodium dodecyl sulfate and sodium dodecyl sulfonate;
S2, adding absolute ethanol and ammonia water successively into the surface-treated M collosol solution; then adding ethyl orthosilicate while stirring, performing reaction for 3h to 10h then separating and drying to obtain SiO₂@M_{y} nanospheres; wherein volume ratio of absolute ethanol, deionized water, ammonia water and ethyl orthosilicate is in a range of 10:18 to 30:3 to 8:1 to 1.5;
S3, according to the stoichiometric ratio of corresponding elements in the chemical formula of A₅₋ₓ(PO₄)₂SiO₄:xRE@M_{y}, weighing compound containing A, soluble phosphate, compound containing RE ,and SiO₂@M_{y} nanospheres obtained in S2 ,then grinding and mixing to obtain mixed powders;
S4, in air or in reducing atmosphere, calcining the mixed powders obtained from S3 at a constant temperature ranged from 800°C to 1600°C for 0.5h to 15 h; then cooling to room temperature, taking out the calcined matter and grinding to obtain luminescent material doped with metal nano particles represented by the chemical formula of A₅₋ₓ(PO₄)₂SiO₄:xRE@M_{y};
wherein @ denotes coating, M is inner core, M is at least one of metal nanoparticles selected from Ag, Au, Pt, Pd and Cu; RE is one or two ions selected from Eu, Gd, Tb, Tm, Sm, Ce, Dy and Mn; A is one or two elements selected from Ca, Sr, Ba, Mg, Li, Na and K; x is stoichiometric number in a range of 0<x≤1; y is molar ratio of M to Si, 0<y≤0.01.

4. The method for preparing luminescent material doped with metal nano particles according to claim 3, wherein the M collosol in S1 is prepared by the following steps:
mixing solution of salt containing M, assistant agent used for dispersing and reducing agent, reacting while stirring to obtain M collosol; wherein molar concentration of M collosol is in a range of 5×10⁻⁴mol/L to 5×10⁻²mol/L.

5. The method for preparing luminescent material doped with metal nano particles according to claim 4, wherein in the solution of salt containing M, salt containing M is at least one of AgNO₃, AuCl₃·HCl·4H₂O, H₂PtCl₆·6H₂O, PdCl₂·2H₂O and Cu(NO₃)₂.

6. The method for preparing luminescent material doped with metal nano particles according to claim 4, wherein the assistant agent is added in an amount sufficient to obtain a concentration in M collosol in a range of 1×10⁻⁴g/mL to 5×10⁻²g/mL; reducing agent is at least one of hydrazine hydrate, ascorbic acid, sodium citrate and sodium borohydride; molar ratio of reducing agent to M is in a range of 3.6:1 to 18:1.

7. The method for preparing luminescent material doped with metal nano particles according to claim 3, wherein in S1, concentration of polyvinylpyrrolidone (PVP) in the aqueous solution of polyvinylpyrrolidone (PVP) is in a range of 0.005g/mL to 0.1g/mL.

8. The method for preparing luminescent material doped with metal nano particles according to claim 3, wherein in S3, the compound containing A is selected from oxide of A, carbonate of A and oxalate of A; soluble phosphate is NH₄H₂PO₄ or (NH₄)₂HPO₄; the compound containing RE is selected from oxide of RE, carbonate of RE and oxalate of RE.

9. The method for preparing luminescent material doped with metal nano particles according to claim 3, wherein in S4, the reducing atmosphere is mixed gases of N₂ and H₂ in a volume ratio of 95:5.

10. The method for preparing luminescent material doped with metal nano particles according to any one of the claims from 3 to 9, wherein x is in a range of 0.001≤x≤0.5, y is in a range of 1×10⁻⁵≤y≤5×10⁻³.

## Patentansprüche

1. Lumineszierendes Material, das mit Metallnanopartikeln dotiert ist, dargestellt durch die chemische Formel A₅₋ₓ(PO₄)₂SiO₄:xRE@M_{y}, worin @ für Beschichtung steht, M der innere Kern ist, M zumindest eines der aus Ag, Au, Pt, Pd und Cu ausgewählten Nanopartikeln ist; RE ein oder zwei aus Eu, Gd, Tb, Tm, Sm, Ce, Dy und Mn ausgewählte Ionen sind; A ein oder zwei aus Ca, Sr, Ba, Mg, Li, Na und K ausgewählte Elemente sind; x eine stöchiometrische Zahl im Bereich von 0 < x ≤ 1 ist; y das Molverhältnis von M zu Si ist, wobei 0 < y ≤ 0,01 ist.

2. Mit Metallnanopartikeln dotiertes lumineszierendes Material nach Anspruch 1, worin x im Bereich 0,001 ≤ x ≤ 0,5 ist, y im Bereich 1x10⁻⁵ ≤ y ≤ 5x10⁻³ ist.

3. Verfahren zur Herstellung eines mit Metallnanopartikeln dotierten lumineszierenden Materials, das Folgendes umfasst:
S1, das Lösen von Polyvinylpyrrolidon (PVP) in deionisiertem Wasser bei Raumtemperatur, um eine wässrige Lösung von Polyvinylpyrrolidon (PVP) herzustellen, dann das Zusetzen von M-Collosol in die wässrige Lösung von Polyvinylpyrrolidon (PVP), 2 h bis 24 h langes magnetisches Rühren, um eine oberflächenbehandelte M-Collosol-Lösung zu erhalten; wobei das M-Collosol durch die folgenden Schritte hergestellt wird:
das Mischen einer Lösung eines Salzes, das M enthält, eines zum Dispergieren verwendeten Hilfsmittels und eines Reduktionsmittels, Umsetzung unter Rühren, um M-Collosol zu erhalten; worin die Molkonzentration von M-Collosol im Bereich von 5x10⁻⁴ mol/l bis 5x10⁻² mol/l liegt, worin das Hilfsmittel zumindest eines von Polyvinylpyrrolidon, Natriumcitrat, Cetyltrimethylammoniumbromid, Natriumdodecylsulfat und Natriumdodecylsulfonat ist;
S2, das Zusetzen von absolutem Ethanol und wässriger Ammoniaklösung in die oberflächenbehandlete M-Collosol-Lösung; das anschließende Zusetzen von Ethylorthosilicat unter Rühren, das Durchführen einer 3 h bis 10 h langen Reaktion, anschließendes Trennen und Trocknen, um SiO₂@M_{y}-Nanokügelchen zu erhalten; worin das Volumenverhältnis zwischen absolutem Ethanol, deionisiertem Wasser, wässriger Ammoniaklösung und Ethylorthosilicat im Bereich von 10:18 bis 30:3 bis 8:1 bis 1,5 liegt;
S3, das Wiegen einer Verbindung, die A enthält, von löslichem Phosphat, einer Verbindung, die RE enthält, von in S2 erhaltenen SiO₂@M_{y}-Nanokügelchen gemäß dem stöchiometrischen Verhältnis der entsprechenden Elemente in der chemischen Formel A₅₋ₓ(PO₄)₂SiO₄:xRE@M_{y}, anschließendes Zerkleinern und Mischen, um Mischpulver zu erhalten;
S4, das 0,5 h bis 15 h lange Kalzinieren der in S3 erhaltenen Mischpulver an der Luft oder in einer reduzierenden Atmosphäre bei einer konstanten Temperatur im Bereich von 800 °C bis 1.600 °C; anschließendes Herunterkühlen auf Raumtemperatur, das Herausnehmen des kalzinierten Materials und dessen Zerkleinern, um lumineszierendes Material zu erhalten, das mit Metallnanopartikeln dotiert ist, dargestellt durch die chemische Formel A₅₋ₓ(PO₄)₂SiO₄:xRE@M_{y},
worin @ für Beschichtung steht, M der innere Kern ist, M zumindest eines der aus Ag, Au, Pt, Pd und Cu ausgewählten Nanopartikeln ist; RE ein oder zwei aus Eu, Gd, Tb, Tm, Sm, Ce, Dy und Mn ausgewählte Ionen sind; A ein oder zwei aus Ca, Sr, Ba, Mg, Li, Na und K ausgewählte Elemente sind; x eine stöchiometrische Zahl im Bereich von 0 < x ≤ 1 ist; y das Molverhältnis von M zu Si ist, wobei 0 < y ≤ 0,01 ist.

4. Verfahren zur Herstellung eines mit Metallnanopartikeln dotierten lumineszierenden Materials nach Anspruch 3, worin das M-Collosol in S1 durch die folgenden Schritte hergestellt wird:
das Mischen einer Lösung eines Salzes, das M enthält, eines zum Dispergieren verwendeten Hilfsmittels und eines Reduktionsmittels, Umsetzung unter Rühren, um M-Collosol zu erhalten; worin die Molkonzentration von M-Collosol im Bereich von 5x10⁻⁴ mol/l bis 5x10⁻² mol/l liegt.

5. Verfahren zur Herstellung eines mit Metallnanopartikeln dotierten lumineszierenden Materials nach Anspruch 4, worin in der Lösung eines Salzes, das M enthält, das M enthaltende Salz zumindest eines von AgNO₃, AuCl₃·HCl·4H₂O, H₂PtCl₆·6H₂O, PdCl₂·2H₂O und Cu(NO₃)₂ ist.

6. Verfahren zur Herstellung eines mit Metallnanopartikeln dotierten lumineszierenden Materials nach Anspruch 4, worin das Hilfsmittel in einer ausreichenden Menge zugesetzt wird, um eine Konzentration von M-Collosol im Bereich von 1x10⁻⁴ g/ml bis 5x10⁻² g/ml zu erhalten; das Reduktionsmittel zumindest eines von Hydrazinhydrat, Ascorbinsäure, Natriumcitrat und Natriumborhydrid ist; das Molverhältnis zwischen dem Reduktionsmittel und M im Bereich von 3,6:1 bis 18:1 liegt.

7. Verfahren zur Herstellung eines mit Metallnanopartikeln dotierten lumineszierenden Materials nach Anspruch 3, worin in S1 die Konzentration von Polyvinylpyrrolidon (PVP) in der wässrigen Lösung von Polyvinylpyrrolidon (PVP) im Bereich von 0,005 g/ml bis 0,1 g/ml liegt.

8. Verfahren zur Herstellung eines mit Metallnanopartikeln dotierten lumineszierenden Materials nach Anspruch 3, worin in S3 die A enthaltende Verbindung aus einem Oxid von A, einem Carbonat von A und einem Oxalat von A ausgewählt ist; das lösliche Phosphat NH₄H₂PO₄ oder (NH₄)₂HPO₄ ist; die RE enthaltende Verbindung aus einem Oxid von RE, einem Carbonat von RE und einem Oxalat von RE ausgewählt ist.

9. Verfahren zur Herstellung eines mit Metallnanopartikeln dotierten lumineszierenden Materials nach Anspruch 3, worin in S4 die reduzierende Atmosphäre Mischgase aus N₂ und H₂ im Volumenverhältnis von 95:5 sind.

10. Verfahren zur Herstellung eines mit Metallnanopartikeln dotierten lumineszierenden Materials nach einem der Ansprüche 3 bis 9, worin x im Bereich von 0,001 ≤ x ≤ 0,5 ist, y im Bereich von 1x10⁻⁵ ≤ y ≤ 5x10⁻³ ist.

## Revendications

1. Matériau luminescent dopé avec des nanoparticules métalliques représenté par la formule chimique A₅-ₓ(PO₄)₂SiO₄:xRE@M_{y}; dans laquelle @ représente un revêtement, M est un noyau interne, M est au moins une des nanoparticules métalliques choisies parmi Ag, Au, Pt, Pd et Cu ; RE est un ou deux ions choisis parmi Eu, Gd, Tb, Tm, Sm, Ce, Dy et Mn ; A est un ou deux éléments choisis parmi Ca, Sr, Ba, Mg, Li, Na et K ; x est un nombre stoechiométrique compris dans la plage de 0 < x ≤ 1 ; y est un rapport molaire de M à Si, 0 < y ≤ 0,01.

2. Matériau luminescent dopé avec des nanoparticules métalliques selon la revendication 1, dans lequel x est compris dans la plage de 0,001 ≤ x ≤ 0,5, y est compris dans la plage de 1x10⁻⁵ ≤ y < 5x10⁻³.

3. Procédé de préparation d'un matériau luminescent dopé avec des nanoparticules métalliques comprenant :
S1, à température ambiante, dissoudre de la polyvinylpyrrolidone (PVP) dans de l'eau désionisée pour préparer une solution aqueuse de polyvinylpyrrolidone (PVP) ; puis ajouter du collosol M dans la solution aqueuse de polyvinylpyrrolidone (PVP), agiter magnétiquement pendant 2 h à 24 h pour obtenir une solution de collosol M traité en surface ; le collosol M est préparé par les étapes suivantes consistant à : mélanger une solution de sel contenant M, un adjuvant utilisé pour la dispersion et un agent de réduction, faire réagir sous agitation pour obtenir le collosol M ; la concentration molaire en collosol M étant comprise dans la plage allant de 5x10⁻⁴ mol/l à 5x10⁻²mol/l, l'adjuvant étant au moins un composé choisi parmi la polyvinylpyrrolidone, le citrate de sodium, le bromure de cétyltriméthylammonium, le dodécylsulfate de sodium et le dodécylsulfonate de sodium ;
S2, ajouter de l'éthanol absolu et de l'eau ammoniaquée successivement dans la solution de collosol M traité en surface ; puis ajouter de l'orthosilicate d'éthyle sous agitation, réaliser la réaction pendant 3h à 10 h, puis séparer et sécher pour obtenir des nanosphères de SiO₂@M_{y}; le rapport volumique de l'éthanol absolu, de l'eau désionisée, de l'eau ammoniaquée et de l'orthosilicate d'éthyle étant compris dans la plage allant de 10:18 à 30:3 à 8:1 à 1:5 ;
S3, en fonction du rapport stoechiométrique des éléments correspondants dans la formule chimique A₅-ₓ(PO₄)₂SiO₄:xRE@M_{y}, peser le composé contenant A, du phosphate soluble, le composé contenant RE et les nanosphères de SiO₂@M_{y} obtenues en S2, puis broyer et mélanger pour obtenir un mélange de poudres ;
S4, dans de l'air ou une atmosphère réductrice, calciner le mélange de poudres obtenu en S3 à une température constante comprise dans la plage allant de 800 °C à 1600 °C pendant 0,5 h à 15 h ; puis refroidir à température ambiante, retirer la matière calcinée et broyer pour obtenir un matériau luminescent dopé avec des nanoparticules métalliques représenté par la formule chimique A₅₋ₓ(PO₄)₂SiO₄:xRE@M_{y} ; dans laquelle @ représente un revêtement, M est un noyau interne, M est au moins une des nanoparticules métalliques choisies parmi Ag, Au, Pt, Pd et Cu ; RE est un ou deux ions choisis parmi Eu, Gd, Tb, Tm, Sm, Ce, Dy et Mn ; A est un ou deux éléments choisis parmi Ca, Sr, Ba, Mg, Li, Na et K ; x est un nombre stoechiométrique compris dans la plage de 0 < x ≤ 1 ; y est un rapport molaire de M à Si, 0 < y ≤ 0,01.

4. Procédé de préparation d'un matériau luminescent dopé avec des nanoparticules métalliques selon la revendication 3, dans lequel le collosol M en S1 est préparé par les étapes suivantes consistant à :
mélanger une solution de sel contenant M, un adjuvant utilisé pour la dispersion et un agent de réduction, faire réagir sous agitation pour obtenir le collosol M ; la concentration molaire en collosol M étant comprise dans la plage allant de 5x10⁻⁴ mol/l à 5x10⁻²mol/l.

5. Procédé de préparation d'un matériau luminescent dopé avec des nanoparticules métalliques selon la revendication 4, dans lequel dans la solution de sel contenant M, le sel contenant M est au moins un élément choisi parmi AgNO₃, AuCl₃.HCl.4H₂O, H₂PtCl₆.6H₂O, PdCl₂.2H₂O et Cu(NO₃)₂.

6. Procédé de préparation d'un matériau luminescent dopé avec des nanoparticules métalliques selon la revendication 4, dans lequel l'adjuvant est ajouté en une quantité suffisante pour obtenir une concentration en collosol M comprise dans la plage allant de 1x10⁻⁴ g/ml à 5x10⁻² g/ml ; l'agent de réduction est au moins un élément choisi parmi une hydrazine hydratée, l'acide ascorbique, le citrate de sodium et le borohydrure de sodium ; le rapport molaire de l'agent de réduction à M étant compris dans la plage allant de 3,6:1 à 18:1.

7. Procédé de préparation d'un matériau luminescent dopé avec des nanoparticules métalliques selon la revendication 3, dans lequel dans S1, la concentration en polyvinylpyrrolidone (PVP) dans la solution aqueuse de polyvinylpyrrolidone (PVP) est comprise dans la plage allant de 0,005 g/ml à 0,1 g/ml.

8. Procédé de préparation d'un matériau luminescent dopé avec des nanoparticules métalliques selon la revendication 3, dans lequel dans S3, le composé contenant A est choisi parmi l'oxyde de A, le carbonate de A et l'oxalate de A ; le phosphate soluble est NH₄H₂PO₄ ou (NH₄)₂HPO₄ ; le composé contenant RE est choisi parmi l'oxyde de RE, le carbonate de RE et l'oxalate de RE.

9. Procédé de préparation d'un matériau luminescent dopé avec des nanoparticules métalliques selon la revendication 3, dans lequel dans S4, l'atmosphère réductrice est un mélange de gaz de N₂ et H₂ selon un rapport volumique de 95:5.

10. Procédé de préparation d'un matériau luminescent dopé avec des nanoparticules métalliques selon l'une quelconque des revendications 3 à 9, dans lequel x est compris dans la plage allant de 0,001 ≤ x ≤ 0,5, y est compris dans la plage de 1x10⁻⁵ ≤ y < 5x10⁻³.
